# EUROPEAN PATENT SPECIFICATION

(11) **EP 3 756 855 B1**
(45) Date of publication and mention of the grant of the patent: **23.08.2023**
(21) Application number: 20182355.6
(22) Date of filing: 25.06.2020
(51) Int. Cl.: B29C 55/14, B29C 55/00, B29K 27/18

(54) **PRODUCTION LINE AND RELATIVE METHOD OF PRODUCTION FOR OBTAINING A LONGITUDINALLY AND TRANSVERSALLY STRETCHED PTFE STRIP**
PRODUKTIONSANLAGE UND RELATIVES PRODUKTIONSVERFAHREN ZUM ERHALTEN EINES LÄNGS- UND QUERGESTRECKTEN PTFE-STREIFENS
LIGNE DE PRODUCTION ET PROCÉDÉ RELATIF DE PRODUCTION POUR OBTENIR UNE BANDE DE PTFE ÉTIRÉE LONGITUDINALEMENT ET TRANSVERSALEMENT

(30) Priority: 26.06.2019 IT 201900010113
(43) Date of publication of application: 30.12.2020
(73) Proprietor: Planichem S.r.l., 25030 Adro (BS) (IT)
(72) Inventor: BERGOMETTI, Pierluigi, 25031 Capriolo (IT)
(74) Representative: Emmi, Mario

(56) References cited:
- US-A1- 2011 104 472
- US-A1- 2012 201 988
- US-A1- 2014 367 325

## Description

### Technical field

The present invention relates to the technical field of production of a PTFE strip.

In particular, the invention relates to a new type of method, and relative plant, capable of producing a PTFE strip subjected to a stretching both longitudinally and transversally.

### Brief outline of prior art

PTFE material has long been known. PTFE, acronym for polytetrafluoroethylene, is a polymer belonging to the class of perfluorocarbons (PFC) resulting from the homopolymerization of tetrafluoroethylene. Normally, it is most commonly known through its brand names such as Teflon, Fluon, Algoflon, Hostaflon, Inoflon, in which other stabilizing and fluidifying components are added to the polymer to improve its possibilities of application or fillers based on silica, carbon, bronze, inox, exd, for increasing the performances in mechanical, pneumatic or chemical field.

It is a plastic material, smooth to touch, and resistant to high temperatures (up to 300°C), used in the industry for many purposes.

For example, it is frequently used for covering surfaces subjected to high temperatures which must be "non-stick" and have a good chemical inertia.

The "non-stick" cooking pans are so-called since they are covered internally by a layer of PTFE (Teflon).

In chemical industry it is used for the realization of gaskets and parts fit to contact corrosive agents.

For example, it is used in engines for eliminating the friction of the gear.

PTFE, in order to have predetermined features, is processed so as to have a bi-directional dilatation and therefore it is stretched both longitudinally and transversally, thus becoming e-PTFE (acronym for indicating "elongated"-PTFE).

The stretching stretches the fibers, both longitudinally and transversally, and this enables to obtain an expanded strip much longer and wider than the initial strip and with reduced thickness, generally with thicknesses in the order of tenths of a millimeter.

All this enables to optimize some technical features of the material, such as the porosity and flexibility thereof.

In the present state of the art, the processing of PTFE for elongating it longitudinally and transversally occurs yet in different phases on different machines.

In a first phase, the strip of PTFE, generally in the form of a roll, is fed to an oven for longitudinal stretching and the product is stretched longitudinally to be afterwards coiled again into a roll. The stretching occurs with systems which create a sort of traction during feeding, for example through a series of conveyor rollers which operate with increasing speeds.

In a second phase, the roll transformed for the effect of the previous longitudinal stretching is picked up and positioned onto another production line where an oven for transversal stretching operates the transversal stretching.

However, the aforesaid processing process is complex since it requires a passage in two different production lines, the whole creating a first inconvenience of slow processing process. The operator must collect the product which has finished the first operative cycle of longitudinal processing to bring it manually to the line of transversal processing and mount it into the suitable machines.

Moreover, two production lines positioned in different points are necessary and this creates an inconvenience of encumbrance, maintenance, electrical consumptions with a processing which is not flexible and fast in its whole.

Finally, since the traditional system is formed by two distinct and separate stretching stations, it is more difficult to vary and set correctly the processing parameters as it would be necessary to modify them on both sections precisely, because the sections are separate and are not managed by a single control system.

Moreover, the publications US2011/104472 and US2014367325 are known.

### Summary of the invention

Therefore, the aim of the present invention is to provide a method for obtaining a membranal strip of e-PTFE type which resolves at least in part said technical disadvantages.

In particular, the aim of the present invention is to provide a method, and relative machinery, which is structurally simple and reduces the problems of encumbrances, maintenance and consumptions.

Moreover, the aim of the present invention is to provide a method, and relative machinery, which enables a variation of productive parameters in simple and functional way.

These and other aims are achieved with the present processing method of a strip (1) of **PTFE** material to transform it afterwards into a strip of e-PTFE type, according to claim 1.

This method comprises the following phases:
- Feeding of a strip of material of **PTFE** type along a first heating section (5), said first heating section forming a passage path for the said strip at a predetermined temperature, the strip, during the said passage along said first heating section (5), being contextually subjected to a predetermined force of traction in longitudinal direction which in combination with the said temperature determines a longitudinal elongation thereof;
- Subsequent entry of the said longitudinally elongated strip into a second heating section (8), said second heating section forming a passage path for the strip at a predetermined temperature, the strip, during said passage along said second heating section, being contextually subjected to a predetermined force of traction in transversal direction which in combination with the said temperature determines a variation of width thereof.
- According to the invention, the said second heating section (8) is positioned in succession to the first heating section (5) downstream of the said first heating section so that the strip exiting from the first heating section automatically enters the second heating section generating a continuous processing process.

In this manner, all the said technical drawbacks are readily resolved. In particular, a single production line in continuous way is now provided wherein a starting strip PTFE is uncoiled to enter in succession two heating sections which operate the stretching contextually.

Therefore, it is not necessary anymore to move from a line of longitudinal stretching to a line of transversal stretching. Moreover, the production line, being single, has now a single controlling device which enables to control much more precisely all the processing parameters. Finally, the costs of maintenance are saved and the encumbrances are reduced.

Advantageously, the operating temperature in said first and second heating section may be comprised in a range between 180°C and 400°C, preferably between 200°C and 390°C.

These values proved to be optimal.

Advantageously, the temperature within the first and second heating section is obtained by activating a plurality of infrared heat sources arranged in the first and second heating section.

The use of infrared heat sources, for example the traditional infrared lamps, brings remarkable advantages.

First of all, the heating is controllable precisely, by suitably adjusting the operative power of lamps (regulation of intensity) or by arranging lamps with different powers according to the needs along the path (for example, less powerful in inlet while increasing the power in outlet).

In the event of adjustment, each one of them is adjustable in different way with respect to the other ones, thus it is possible to create a variation of temperature along the path, for example starting from a lower temperature in inlet to increase it afterwards during the path towards the outlet. Such lamps are activated by thermo-regulators and controlled by optical pyrometers which read the effective temperature of the PTFE product under processing to maintain in this way the temperature at the correct value and intervene with a correction of temperature if necessary. This reduces the thermal shock onto the material.

Finally, the lamps radiate directly onto the path of passage thus heating it and leaving cold the other areas onto which they do not impact. Therefore, this causes a localized precise and accurate heating and therefore no great insulations are required.

Advantageously, as per what has been described above, the said infrared heat sources are controlled so that the temperature within said first and second heating sections progressively increases from the inlet towards the outlet, for example varying from approximately 200°C in inlet to reach approximately 390°C in outlet.

Advantageously, there may be provided a phase of arrangement of a decoiler (2) positioned upstream of the said first heating section (5) and mounting of a roll of strip of (PTFE) material onto said decoiler so that the strip can be uncoiled and fed to the said first heating station.

Advantageously, at the end of the processing cycle, there may be provided a phase of winding of the roll in outlet (e-PTFE) from the said second heating section (8) through a suitable winding section (9) positioned downstream of the said second heating section (8).

Advantageously, a braking unit (4) may be provided upstream of the first heating section (5) and a pulling unit (7) is provided downstream of the first heating section (5), adjustable so as to generate a predetermined state of longitudinal traction onto the strip.

Advantageously, the braking unit (4) may be formed by a motorized unit of rollers (4a, 4b, 4c) through which the strip under processing passes, the pulling unit being in turn formed by a motorized unit of rollers (7a, 7b, 7c) through which the strip under processing passes; the adjustment of the said state of tension is obtained by adjusting the rotational speed of the rollers of the braking unit to a lower value with respect to the rotational speed of the rollers of the pulling unit.

Advantageously, the said passage through the said second heating section (7) is carried out through gripping means which grip the two sides of the strip dragging it (21, 22, 23) through the said path along said second heating section and contextually generating a transversal traction onto the strip which tends to increase the reciprocal distance of the two sides of the strip.

There is also described here a plant for transforming a strip (1) of material of **PTFE** into a strip of **e-PTFE,** the plant comprising:
- A first heating section (5), said first heating section forming a passage path (P) for the said strip;
- Pulling means (4, 7) for moving said strip through said first heating section (5), said pulling means being configured for generating, contextually to the passing of the strip along said first heating section, a predetermined force of traction in the longitudinal direction;
- A second heating section (8), said second heating section forming a passage path for the strip at a predetermined temperature;
- Means of transversal traction (21, 22, 23) configured for gripping the strip at the two sides thereof and to drag it along said second heating section, said means of transversal traction (21, 22, 23) generating during said passage along the said second heating section contextually a predetermined force of traction in the transversal direction;
- **Characterized by the fact that** the said second heating section (8) is positioned in succession to the first heating section (5) downstream of the said first heating section so that the strip exiting from the said first heating section automatically enters the second heating section thus generating a continuous processing process.

Advantageously, each one of the said first and second heating section comprises, a plurality of infrared heat sources (6) arranged in succession along the passage path of the said strip between the inlet and the outlet.

Advantageously, there is comprised a heat controlling device programmed for controlling the said infrared heat sources (6) so that the temperature within said first and second heating section progressively increases from the inlet towards the outlet, preferably varying from approximately 200°C in inlet to reach 390°C in outlet.

Advantageously, there are provided sensors of temperature which detect the temperature along the path of the two ovens and send a signal to the controlling device which intervenes by correcting the intensity of the lamps where a value of temperature different from the programmed one is detected.

### Brief description of the drawings

Further features and advantages of the present method and relative machinery, according to the invention, will become apparent from the following description of preferred embodiments thereof, given only by way of nonlimiting example, with reference to the attached drawings, wherein:
- Figure 1 outlines the roll of PTFE mounted onto the tips (2a, 2b) of a decoiler and forming the first section of the production line;
- Figure 2 depicts a motorized braking section 4 which determines a slowing of the advancement of the strip in the processing path thereof;

- Figure 3 outlines in axonometric view the subsequent section 5 formed by an oven through which the strip of material is fed;
- Figure 4 depicts a schematic view of the said oven for highlighting the infrared lamps used for the heating;

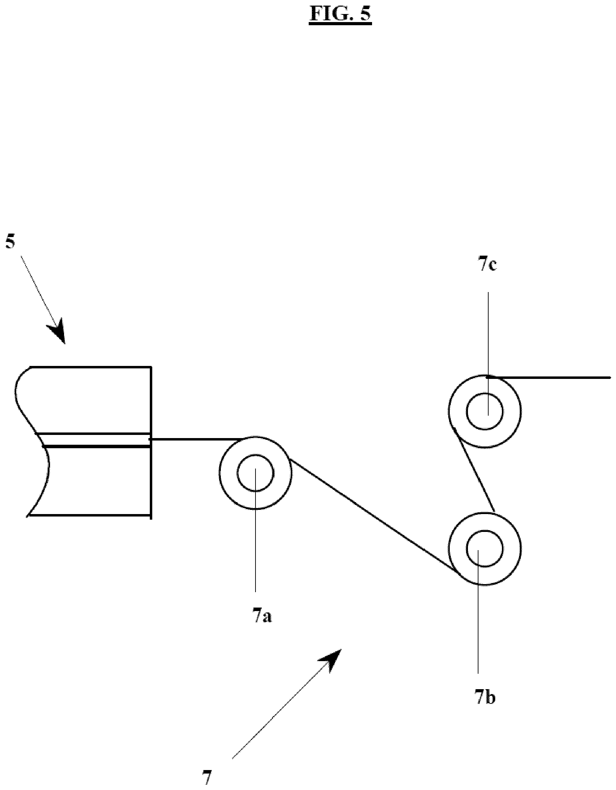

- Figure 5 depicts the subsequent section 7 in outlet from the said oven and formed by a pulling set 7 which pulls the strip out of the oven; the speed whereby this second pulling unit pulls the strip is greater than that of the braking unit so as to generate just a predetermined state of longitudinal tension in the strip while passing through the first oven caused by such two differences of speed;
- Figure 6 schematizes an axonometric view of a catenary responsible of gripping/pulling the strip through a second oven 8;
- Figure 7 is an overall schematization of the production line and highlights the structure of the second oven 8, highlighting how the catenary moves along a path which enlarges transversally the strip under processing.

### Description of some preferred embodiments

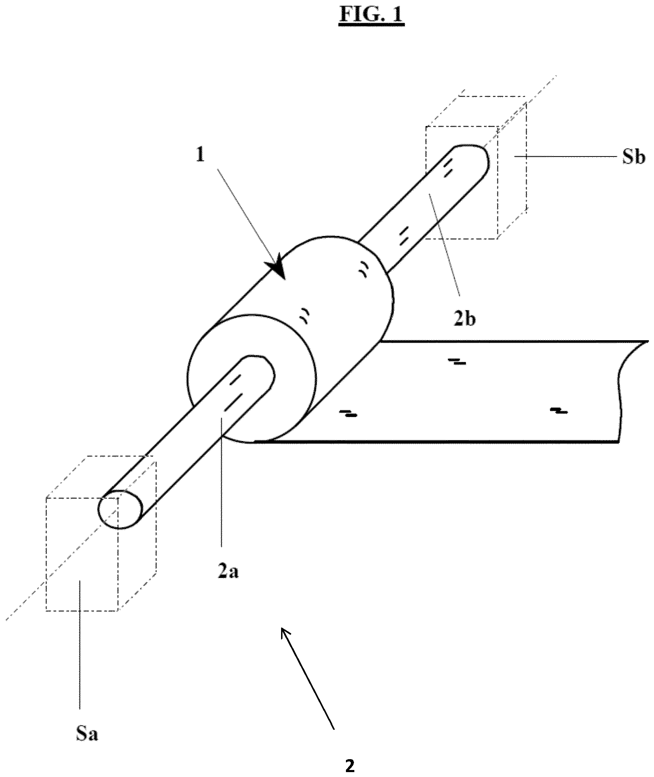

In accordance with figure 1, it is therefore depicted a strip 1 of PTFE material at the beginning of the processing process thereof, therefore before the stretching in longitudinal and transversal direction subject of the invention.

The strip may be coiled around a central core or may be coiled without central core (with "core" - i.e. with central core or without "core" - without central core). The preferred embodiment is the one with "core", i.e. with central core.

In any case, as depicted in figure 1, it is suitably charged onto a decoiler 2.

The decoiler, schematized in figure 1, may preferably have a tip 2a and a counter-tip 2b each one mounted onto a respective support (Sa, Sb).

Tip and counter-tip may be movable according to a motion of translation which moves the tips close to each other reciprocally so as to be inserted within the core of the roll, as depicted in figure 1. Moreover, the tips may draw away from each other reciprocally for clearing the core and enabling the downloading of the roll and/or the change with a new roll.

Preferably the supports (Sa, Sb) are of hydraulic or pneumatic type.

In any case, a control is anyway present, preferably hydraulic, which controls the said movement of translation of the tips.

The tips may have such a diameter as to insert themselves within the core of the roll with a certain backlash, such that the roll rotates freely around the tips.

Differently, a preferred embodiment provides that tip and counter-tip are mounted onto rotary bearings and with a diametral size of tip and counter-tip such that they fit into the core of the roll by interference. In this way, when the strip is pulled, the roll may anyway rotate since the tips (2a, 2b) are mounted in idle manner onto the relative bearings and they rotate around their axis. This embodiment renders obviously the roll stable during the rotation.

Therefore, preferably, the said decoiler is not motorized, i.e. tip and counter-tip are not made to rotate by an engine associated to the decoiler and therefore the tips may possibly rotate in idle manner onto bearings while they may further move according to a motion of translation as described above.

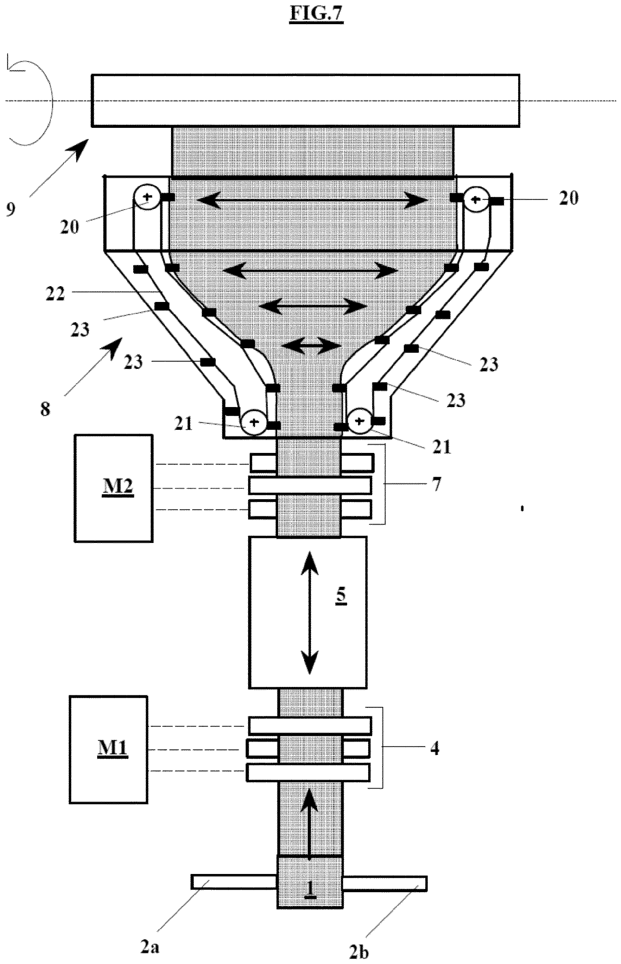

In fact, as outlined in figure 7, the strip is advanced by means of a suitable motorization (M1, M2) applied to a first unit of rollers 4 and to a second unit of rollers 7 which in the whole pull and then advance the strip according to the direction of processing with a predetermined value of tension (longitudinal traction).

As described in greater details thereinafter, between said two units (4, 7) there is interposed a first heating section 5 and therefore with the first unit 4 positioned upstream of the section 5 and the second unit 7 positioned downstream.

The first unit of rollers 4 is de facto a braking unit and therefore it tends to brake the strip with respect to the second unit 7 which is a proper pulling unit.

In this embodiment, the effect of tension is obtained by adjusting the two units at different speeds.

In particular, the rotation speed of the rollers belonging to the two pulling units is different from one another. In particular the second pulling unit 7 downstream of the oven 5, formed by a series of motorized rollers (7a, 7b, 7c) has a greater rotation speed with respect to the braking unit 4 positioned upstream of the oven 5 and which is also formed by a motorized unit of rollers (4a, 4b, 4c). Therefore, de facto, the first unit 4 acts as a brake and this causes an action of traction to which the strip is subjected during the passage thereof between the braking section 4 and the pulling station 7, and thus during the passage thereof along the oven 5 interposed between the first and second unit of rollers.

In fact, the figure 7 schematizes, with a double longitudinal arrow, the action of traction to which the strip is subjected during the passage thereof through the station 5 and determined indeed by the differences of speed of the two pulling units.

This traction determines a longitudinal elongation of the fibers.

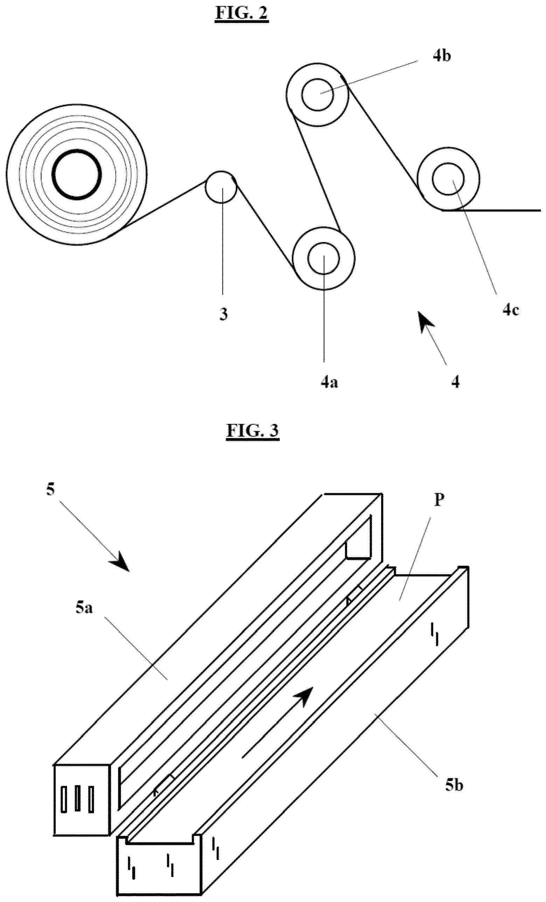

Therefore, by describing the braking unit 4 in greater constructive details, with reference to figure 2, three rolls (4a, 4b, 4c) are depicted.

The roller 3 is an idle return roll only.

Such three rollers are preferably covered externally by a silicone rubber which increases the friction thus preventing the strip from sliding with respect to the rollers.

Other materials with high coefficient of friction could be used.

In this manner, the strip under processing is well adherent to the rollers along the passage thereof and thus it is stable and well conducted.

Figure 2 schematizes the passage of the strip under processing through the said rollers.

The rollers are offset in height between one another, i.e. they are positioned at different heights so that the strip makes a tortuous path between them and this determines a good state of contact and dragging of the strip.

As schematized in figure 7 as well, there is therefore provided a first motorization (M1) which makes such rollers of the first unit 4 rotate, so as to determine an advancement of the strip towards the section 5.

As depicted in figure 7, in outlet from the section 5, the second motorized pulling unit is provided, i.e. the unit 7. The motorization (M2) makes the second unit rotate at a speed which is greater than that of the braking unit 4, so as to generate a longitudinal traction onto the strip under processing due just to this difference of speed.

The fact of having two independent motorizations (M1) and (M2) for the first and the second pulling unit has the advantage of enabling a precise adjustment of the tension needed onto the strip. In fact, by suitably adjusting the two speeds one can modify the value of tension according to the desired values.

Both in the first and the second unit, also only one of the rollers which form the units may be motorized while the others may be idle.

A controlling device provided with a suitable processor (not depicted in figure for simplicity) is programmed for controlling and ordering the speed of the two said engines (M1, M2) on the basis of the desired stretching ratio that one aims to obtain. The stretching ratio is the ratio between the size of inlet and the size of outlet of a certain portion of strip both longitudinally and transversally.

The processor suitably programmed through a dedicated software is therefore capable of adjusting the speeds of the two units depending on the desired stretching value inserted, for example through the control panel.

Another embodiment of invention might provide that the second unit 7, in outlet from the heating section 5 is motorized while the first unit is not motorized but anyway the rollers rotate with a certain resistance, thus performing a braking action anyway. In this way, by varying the speed of the second pulling unit (in this case the only one) one may vary the longitudinal tension onto the strip, while remaining constant the resistance of the first unit. Obviously, being capable of acting onto the speed of the second unit only, the adjustments of tension are lower and less precise with respect to the case of two independent motorizations.

This solution may thus be realized for saving costs only, thus avoiding a motor and the software of dialogue, but aware of the limitations of use.

Mechanical tightening systems may be used for varying the resistance of the unmotorized braking unit but this solution is obviously more complex, less precise and it is not suitable for an automation like the case of two motors which can be managed remotely by the control panel.

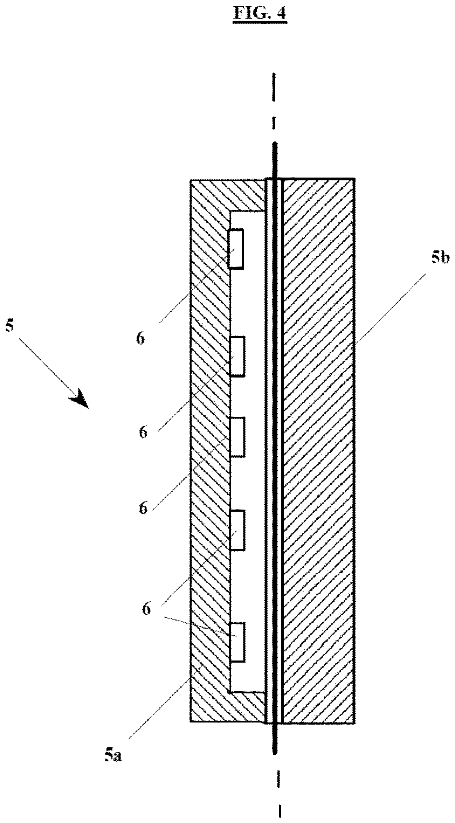

The interposed section 5 is therefore an oven of longitudinal stretching and it is visible in figure 3 and in figure 4.

The internal heating system, as depicted in the section of figure 4, is preferably obtained through a series of infrared lamps 6.

Namely it has been found that such lamps enable to reach desired temperatures in few minutes. In fact, the lamps, as schematized in figure 4, are positioned so as to radiate the passage path of the strip. This means that they radiate directly onto the strip, thus heating an area which is just the area of passage of the strip and thus avoiding to heat other areas. This ensures a correct and precise temperature acting onto the strip.

The strip, subjected to this temperature within the oven and, contextually, subjected to the traction generated by the difference of speed of the two above-introduced units during the advancement thereof along the path of the oven 5, is subjected to a longitudinal elongation.

This elongation is adjustable depending on needs by modifying the operative temperatures and the difference of speed between upstream and downstream, therefore by adjusting the braking action of the first unit (braking unit) with respect to the second pulling unit (the proper pulling unit).

The operative temperatures of the oven are generally above 180°C, preferably above 200°C.

In particular a useful range is between 180°C and 400°C, preferably between 200°C and 390°C.

The difference of speed between the upstream unit of rollers 4 and the downstream one 7 is adjustable through factors of elongation or widening up to 8 times.

Going into the greater constructive detail, figure 3 schematizes this oven 5 which, as mentioned and as also depicted in figure 4, is provided with a series of infrared lamps which intercept the advancement path of the strip.

The infrared lamps are per se known and available on the market. The person skilled in the art may select the most suitable ones for his case.

The infrared has the advantage to create heat by radiating electromagnetic waves which act directly onto the surface on which they impact.

Therefore, by arranging them suitably so as to intercept the path of passage of the strip, they heat precisely the strip only thus leaving the other areas of the oven "cold".

This implies precision and energy saving. The speeds of advancement of the strip may be adjusted according to needs. For example, a possible value may be an advancement of approximately 10 meters of strip per minute.

Therefore, the oven 5 is formed by one upper cover (5a) hinged to the base (5b), so that the cover is rotatable to the opened position of figure 3. The operative position is obviously the closed one in which the upper cover (5a) is rotated onto the base (5b), as also depicted in the section of figure 4 thus bringing the lamps to point at the passage path. The infrared lamps are mounted in the upper cover, as depicted in section of figure 4.

The lamps might also be mounted at the base (5b) or be arranged in part on the cover and in part on the base. In this case, efficaciously, the strip is radiated onto both surfaces in a phase wherein the thickness thereof is still large.

Advantageously, the chambers of the oven may be covered by mirroring material, so as to make the rays of lights glance off towards all the directions in order to intercept the strip.

As schematized in figure 4 as well, the oven creates a passage channel such that the strip does not touch any part of the oven and then it is supported in traction by the upstream unit 4 and the downstream one 7. In fact, the contact may damage the strip under processing.

In fact, figure 3 schematizes the path (P) which is formed by a sort of channel dug in the lower part (5b). In this manner, also when the cover is closed on the lower part (or base), the strip moves and slides freely without touching parts of the oven within this channel (P).

Infrared lamps are a preferred solution because they radiate heat precisely and very quickly onto the path. Moreover, they save energy costs and are controllable by a processor.

In fact, a further advantage of the invention derives from this last feature. The lamps are positioned in succession along the path from the inlet towards the outlet for both ovens.

Therefore, a controlling device controls the working power of the lamps so that within the oven a progressive increase of the temperature occurs from the inlet towards the outlet. It is sufficient to set the first lamps in proximity of the inlet at a certain working power while the other ones, as there is the movement towards the outlet, have a setting with greater powers along the path, thus increasing the temperature.

Therefore, the result is to have a path within the ovens with a very precise temperature and increasing from the inlet to the outlet. This enables to avoid thermal shocks to the material which does not impact immediately in inlet with a high temperature but, instead, it has a lower temperature to increase afterwards along the path. Generally, a temperature of approximately 200°C is present at the inlet and it increases to values of approximately 390°C towards the outlet.

However, different heating systems such as with electric resistance are not excluded, even if, in that case, there is heat dispersion in the whole environment formed by the oven and higher costs.

Going back to the schematization of figure 7, the strip in outlet from the second unit of rollers 7 (the pulling rollers) enters now a station of transversal stretching 8 positioned therefore in succession to the one of longitudinal stretching.

Therefore, the strip follows a processing in a continuous way.

Figure 7 schematizes this section.

The oven 8 is conceptually equal to the oven 5 and therefore it works preferably by means of infrared lamps which are positioned onto the cover and/or at the base, which cover is hinged with respect to the base like the case of the oven 5.

In that case, being reduced the thickness of the material, the lamps may be positioned onto the cover only, if necessary but not necessarily providing the base of the oven with reflecting material to reflect the rays passing through the thickness of the strip again towards the lower surface of the strip.

As it is inferable from figure 7, a first difference consists yet in the form since this oven 8 enlarges funnel-like towards the outlet direction of the strip, so that during the passage of the strip which stretches transversally and then "enlarges" itself, this strip keeps remaining within the oven.

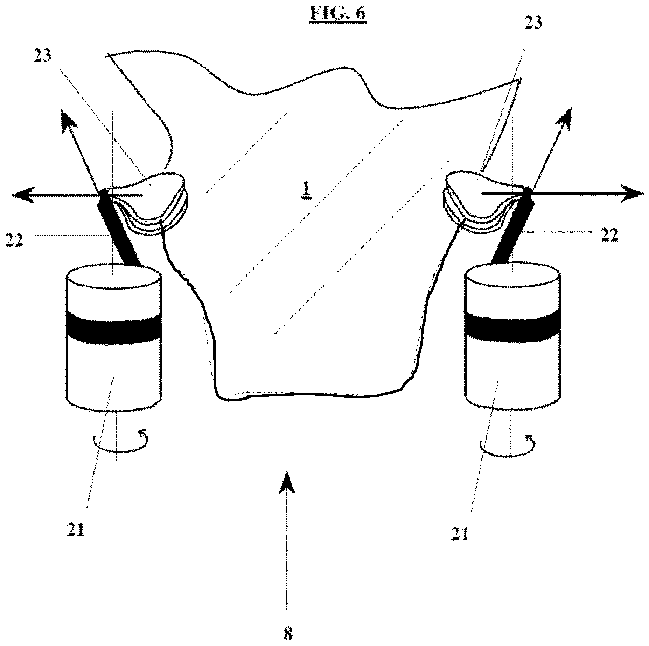

It is then provided a catenary schematized in figure 7 and a part thereof is visible in a detail of figure 6. The catenary serves to move the strip though that oven and, contextually, to generate a transversal force of traction which in combination with the temperature generated by the said oven determines the transversal elongation.

In this case too, during the passage, the strip has no contact with any structural part which forms the passage channel of the oven, except for the catenary which grips it onto a part of end edge which will result in a small waste edge.

Substantially, as depicted in figure 7, at the right side of the oven and at the left side there are provided:
- Two rollers (20, 21) and of which a motorized one and a return one;
- A endless belt 22 which passes through the said two rollers;
- A plurality of pliers 23 connected to the belt so that they are dragged by the rotary movement of the belt.

This above-described structure is present on both sides of the oven and in an obvious and equivalent variant embodiment the belt may be replaced with a chain and therefore the rollers with sprocket wheels.

Namely, figure 7 depicts the endless belt (or chain in equivalent way) which is moved by the rollers and all the pliers 23 connected to it.

The motorized rollers (20, 21) which afterwards move the two belts 22 are synchronized with the rollers of the second unit 7 and rotate at the same speed so as not to generate in this case a difference of speed in the section comprised between the catenary and the unit 7.

In fact, it is not necessary anymore to stretch the strip which must maintain a right advancement tension.

It is instead provided an opening/closing system of the pliers 23 such that the pliers, as schematized in figure 7, grip the strip 1 in inlet from the side thereof. Therefore, the pliers on the right grip the right side of the strip under processing and the pliers on the left grip the left side.

The opening/closing of the pliers may be easily controlled by a cam system.

The strip which moves the pliers follows an enlargement (divarication) path so that the distance between the two pliers in inlet of the oven (the plier of the right side and the one of the left side) increases as the pliers move towards the outlet zone. Therefore, this determines a transversal traction, as schematized in figure 7 as well, to which the strip is subjected while passing through the oven at temperature.

Here too, the ideal working temperatures are the ones indicated above for the first oven.

The opening/closing system of the pliers releases the side of the strip in outlet from the oven 8 and the strip is progressively coiled through a decoiler 9.

As it is well highlighted from the schematization of figure 7, the sizes of the strip in terms of length and width are strongly varied with respect to the starting strip, since the strip according to this process has been stretched both longitudinally and transversally.

The ratio of longitudinal elongation may go up to eight times while instead the transversal one is of twenty times.

Therefore, the so-processed strips are elongated of approximately 800% (from 1 to 8) and enlarged of approximately 1700% thus from 130 to 2500.

An embodiment wherein the positions of the first and second heating section are inverted, i.e. the first section positioned downstream of the second section, may be possible and it is anyway to be intended as an equivalent one, as long as obviously the said sections are positioned in a continuous way.

Considering all what has been described above, for this purpose, it is described here a plant for transforming a strip (1) of material of **PTFE** type into a strip of **e-PTFE** type, the plant comprising:
- A first heating section (5), said first heating section forming a passage path (P) for the said strip;
- Pulling means (4, 7) for moving said strip through said first heating section (5), said pulling means being configured for generating, contextually to the passing of the strip along said first heating section, a predetermined force of traction in longitudinal direction;
- A second heating section (8), said second heating section forming a passage path for the strip at a predetermined temperature;
- Means of transversal traction (21, 22, 23) configured for gripping the strip at the two sides thereof and to drag it along said second heating section, said means of transversal traction (21, 22, 23) generating during said passage along the said second heating section contextually a predetermined force of traction in transversal direction;

And wherein the said two heating sections (5, 8) are positioned in succession to each other so as to have a continuous processing process.

## Claims

1. A method for processing a strip (1) of a material of **PTFE** type to transform it into a strip of **e-PTFE** type, the method comprising the following phases:
- Feeding of a strip of a material of **PTFE** type along a first heating section (5), said first heating section forming a passage path for the said strip at a predetermined temperature, the strip, during the said passage along said first heating section (5), being contextually subjected to a predetermined force of traction in longitudinal direction which, in combination with the said temperature, determines a longitudinal elongation thereof;
- Subsequent entry of the said longitudinally elongated strip into a second heating section (8), said second heating section forming a passage path for the strip at a predetermined temperature, the strip, during said passage along said second heating section, being contextually subjected to a predetermined force of traction in transversal direction which in combination with the said temperature determines a variation of width thereof;
- The said second heating section (8) being positioned in succession to the first heating section (5) downstream of the said first heating section so that the strip exiting from the first heating section automatically enters the second heating section generating a continuous processing process;
- **Characterized by the fact that** a braking unit (4) is provided upstream of the first heating section (5) and a pulling unit (7) is provided downstream of the first heating section (5), both adjustable so as to generate a predetermined state of longitudinal traction of the strip, the first heating section (5) being an oven (5), the oven creating a passage channel such that the strip does not touch any part of the oven and then it is supported in traction by the breaking unit (4) and the pulling unit (7) both positioned externally to the said oven (5).

2. A method, according to claim 1, wherein the operating temperature in said first and second heating section is comprised in a range between 180°C and 400°C, preferably between 200°C and 390°C.

3. A method, according to claim 1 or 2, wherein the temperature in the first and in the second heating section is obtained by activating a plurality of infrared heat sources (6) arranged in the first and in the second heating section.

4. A method, according to claim 3, wherein the said infrared heat sources are controlled so that the temperature inside said first and second heating section progressively increases from the inlet towards the outlet, preferably varying from 200°C in inlet to reach 390°C in outlet.

5. A method, according to claim 3 or 4, wherein said infrared heat sources are positioned so as to intercept exclusively the passage path of the strip.

6. A method, according to claim 1, wherein the braking unit (4) is formed by a motorized unit of rollers (4a, 4b, 4c) through which the strip under processing passes, the pulling unit being formed by a motorized unit of rollers (7a, 7b, 7c) through which the strip under processing passes, the adjustment of the said state of tension being obtained by adjusting the rotational speed of the rollers of the braking unit to a lower value with respect to the rotational speed of the rollers of the pulling unit.

7. A method, according to claim 1, wherein said passage through the said second heating section (8) is carried out through gripping means which grip the two sides of the strip dragging it (21, 22, 23) through the said path along said second heating section and contextually generating a transversal traction on the strip which tends to increase the reciprocal distance of said two sides of the strip, preferably the strip having no contact with any part of the passage path of the said second section.

8. A plant for transforming a strip (1) of a material of **PTFE** type into a strip of the **e-PTFE** type, the plant comprising:
- A first heating section (5), said first heating section forming a passage path (P) for the said strip;
- Pulling means (4, 7) for moving the said strip through said first heating section (5), said pulling means being configured for generating, contextually to the passage of the strip along said first heating section, a predetermined force of traction in longitudinal direction;
- A second heating section (8), said second heating section forming a passage path for the strip at a predetermined temperature;
- Means of transversal traction (21, 22, 23) configured for gripping the strip at the two sides thereof and to drag it along said second heating section, said means of transversal traction (21, 22, 23) generating during said passage along the said second heating section contextually a predetermined force of traction in transversal direction;
- the said second heating section (8) being positioned in succession to the first heating section (5) downstream of the said first heating section so that the strip exiting from the first heating section automatically enters the second heating section generating a continuous processing process;
- **Characterized in that** a braking unit (4) is provided upstream of the first heating section (5) and a pulling unit (7) is provided downstream of the first heating section (5), both adjustable so as to generate a predetermined state of longitudinal traction on the strip during the passage thereof into the first heating section, the said first heating section being an oven (5) creating a passage channel such that the strip does not touch any part of the oven and then it is supported in traction by the breaking unit (4) and the pulling unit (7) both positioned externally to the said oven (5).

9. A plant, according to claim 8, wherein each one of the said first and second heating section comprises a plurality of infrared heat sources (6) arranged in succession along the passage path of the said strip between the inlet and the outlet.

10. A plant, according to claim 9, wherein there is comprised a heat controlling device programmed for controlling the said infrared heat sources (6) so that the temperature within said first and second heating section progressively increases from the inlet towards the outlet, preferably varying from approximately 200°C in inlet to reach 390°C in outlet.

11. A plant, according to claim 9 or 10, wherein the said infrared heat sources are positioned so as to intercept exclusively the passage path of the strip.

## Patentansprüche

1. Verfahren zum Bearbeiten eines Streifens (1) aus einem Material vom **PTFE**-Typ, um ihn in einen Streifen vom **e-PTFE**-Typ umzuwandeln, wobei das Verfahren die folgenden Schritte umfasst:
- Zuführen eines Streifens aus einem Material des **PTFE**-Typs entlang eines ersten Heizabschnitts (5), wobei der erste Heizabschnitt einen Durchgangsweg für den Streifen bei einer vorbestimmten Temperatur bildet, wobei der Streifen während des Durchgangs entlang des ersten Heizabschnitts (5) kontextuell einer vorbestimmten Zugkraft in Längsrichtung unterzogen wird, die in Kombination mit der Temperatur seine Längsdehnung bestimmt;
- Nachfolgendes Einführen des in Längsrichtung langgestreckten Streifens in einen zweiten Heizabschnitt (8), wobei der zweite Heizabschnitt einen Durchgangsweg für den Streifen bei einer vorbestimmten Temperatur bildet, wobei der Streifen während des Durchgangs entlang des zweiten Heizabschnitts kontextuell einer vorbestimmten Zugkraft in Querrichtung unterzogen wird, die in Kombination mit der Temperatur eine Variation seiner Breite bestimmt;
- wobei der zweite Heizabschnitt (8) nacheinander an den ersten Heizabschnitt (5) stromabwärts des ersten Heizabschnitts positioniert ist, so dass der aus dem ersten Heizabschnitt austretende Streifen automatisch in den zweiten Heizabschnitt eintritt, wodurch ein kontinuierlicher Bearbeitungsprozess erzeugt wird;
- **Dadurch gekennzeichnet, dass** eine Bremseinheit (4) stromaufwärts des ersten Heizabschnitts (5) vorgesehen ist und eine Zugeinheit (7) stromabwärts des ersten Heizabschnitts (5) vorgesehen ist, die beide einstellbar sind, um einen vorbestimmten Zustand der Längszugkraft des Streifens zu erzeugen, wobei der erste Heizabschnitt (5) ein Ofen (5) ist, wobei der Ofen einen Durchgangskanal erzeugt, derart, dass der Streifen keinen Teil des Ofens berührt, und dann durch die Bremseinheit (4) und die Zugeinheit (7), die beide außerhalb des Ofens (5) positioniert sind, in Zugkraft abgestützt wird.

2. Verfahren nach Anspruch 1, wobei die Betriebstemperatur im ersten und zweiten Heizabschnitt in einem Bereich zwischen 180°C und 400°C, vorzugsweise zwischen 200°C und 390°C, liegt.

3. Verfahren nach Anspruch 1 oder 2, wobei die Temperatur im ersten und im zweiten Heizabschnitt durch Aktivieren einer Vielzahl von Infrarotwärmequellen (6) erhalten wird, die im ersten und im zweiten Heizabschnitt angeordnet sind.

4. Verfahren nach Anspruch 3, wobei die Infrarotwärmequellen so gesteuert werden, dass die Temperatur innerhalb des ersten und zweiten Heizabschnitts vom Einlass zum Auslass progressiv zunimmt, vorzugsweise von 200°C im Einlass variiert, um 390°C im Auslass zu erreichen.

5. Verfahren nach Anspruch 3 oder 4, wobei die Infrarotwärmequellen so angeordnet sind, dass sie ausschließlich den Durchgangsweg des Streifens abfangen.

6. Verfahren nach Anspruch 1, wobei die Bremseinheit (4) durch eine motorisierte Einheit von Rollen (4a, 4b, 4c) gebildet ist, durch die der zu bearbeitende Streifen läuft, wobei die Zugeinheit durch eine motorisierte Einheit von Rollen (7a, 7b, 7c) gebildet wird, durch die der zu bearbeitende Streifen läuft, wobei die Einstellung des Spannungszustands durch Einstellen der Drehgeschwindigkeit der Rollen der Bremseinheit auf einen niedrigeren Wert in Bezug auf die Drehgeschwindigkeit der Rollen der Zugeinheit erhalten wird.

7. Verfahren nach Anspruch 1, wobei der Durchgang durch den zweiten Heizabschnitt (8) durch Greifmittel ausgeführt wird, die die beiden Seiten des Streifens greifen, indem sie ihn (21, 22, 23) durch den Weg entlang des zweiten Heizabschnitts ziehen und kontextuell einen transversalen Zug auf den Streifen erzeugen, der dazu neigt, den reziproken Abstand der beiden Seiten des Streifens zu vergrößern, wobei der Streifen vorzugsweise keinen Kontakt mit irgendeinem Teil des Durchgangswegs des zweiten Abschnitts hat.

8. Anlage zum Umwandeln eines Streifens (1) aus einem Material des **PTFE**-Typs in einen Streifen des **e-PTFE**-Typs, wobei die Anlage Folgendes umfasst:
- einen ersten Heizabschnitt (5), wobei der erste Heizabschnitt einen Durchgangsweg (P) für den Streifen bildet;
- Zugmittel (4, 7) zum Bewegen des Streifens durch den ersten Heizabschnitt (5), wobei die Zugmittel konfiguriert sind, um kontextuell mit dem Durchgang des Streifens entlang des ersten Heizabschnitts eine vorbestimmte Zugkraft in Längsrichtung zu erzeugen;
- einen zweiten Heizabschnitt (8), wobei der zweite Heizabschnitt einen Durchgangsweg für den Streifen bei einer vorbestimmten Temperatur bildet;
- Mittel zum Querziehen (21, 22, 23), die konfiguriert sind, um den Streifen an seinen beiden Seiten zu greifen und ihn entlang des zweiten Heizabschnitts zu ziehen, wobei die Mittel zum transversalen Ziehen (21, 22, 23) während des Durchgangs entlang des zweiten Heizabschnitts kontextuell eine vorbestimmte Zugkraft in Querrichtung erzeugen;
- wobei der zweite Heizabschnitt (8) nacheinander an den ersten Heizabschnitt (5) stromabwärts des ersten Heizabschnitts positioniert ist, so dass der aus dem ersten Heizabschnitt austretende Streifen automatisch in den zweiten Heizabschnitt eintritt, wodurch ein kontinuierlicher Bearbeitungsprozess erzeugt wird;
- **Dadurch gekennzeichnet, dass** eine Bremseinheit (4) stromaufwärts des ersten Heizabschnitts (5) vorgesehen ist und eine Zugeinheit (7) stromabwärts des ersten Heizabschnitts (5) vorgesehen ist, die beide einstellbar sind, um einen vorbestimmten Zustand der Längszugkraft auf den Streifen während des Durchgangs desselben in den ersten Heizabschnitt zu erzeugen, wobei der erste Heizabschnitt ein Ofen (5) ist, der einen Durchgangskanal erzeugt, derart, dass der Streifen keinen Teil des Ofens berührt, und dann durch die Bremseinheit (4) und die Zugeinheit (7), die beide außerhalb des Ofens (5) positioniert sind, in Zugkraft abgestützt wird.

9. Anlage nach Anspruch 8, wobei sowohl der erste als auch der zweite Heizabschnitt eine Vielzahl von Infrarotwärmequellen (6) umfasst, die nacheinander entlang des Durchgangswegs des Streifens zwischen dem Einlass und dem Auslass angeordnet sind.

10. Anlage nach Anspruch 9, wobei eine Wärmesteuervorrichtung enthalten ist, die zum Steuern der Infrarotwärmequellen (6) programmiert ist, so dass die Temperatur innerhalb des ersten und zweiten Heizabschnitts vom Einlass zum Auslass progressiv zunimmt, vorzugsweise von ungefähr 200°C am Einlass variiert, um 390°C am Auslass zu erreichen.

11. Anlage nach Anspruch 9 oder 10, wobei die Infrarotwärmequellen so positioniert sind, dass sie ausschließlich den Durchgangsweg des Streifens unterbrechen.

## Revendications

1. Procédé pour le traitement d'une bande (1) d'un matériau de type **PTFE** pour la transformer en une bande de type **e-PTFE,** le procédé comprenant les phases suivantes :
- l'apport d'une bande d'un matériau de type **PTFE** le long d'une première section de chauffage (5), ladite première section de chauffage formant un chemin de passage pour ladite bande à une température prédéterminée, la bande, pendant ledit passage le long de ladite première section de chauffage (5), étant contextuellement soumise à une force de traction prédéterminée dans la direction longitudinale qui, en combinaison avec ladite température, détermine un allongement longitudinal de celle-ci ;
- l'entrée ultérieure de ladite bande longitudinalement allongée dans une seconde section de chauffage (8), ladite seconde section de chauffage formant un chemin de passage pour la bande à une température prédéterminée, la bande, pendant ledit passage le long de ladite seconde section de chauffage, étant contextuellement soumise à une force de traction prédéterminée dans la direction transversale qui, en combinaison avec ladite température, détermine une variation de largeur de celle-ci ;
- ladite seconde section de chauffage (8) étant positionnée successivement à la première section de chauffage (5) en aval de ladite première section de chauffage de sorte que la bande sortant de la première section de chauffage entre automatiquement dans la seconde section de chauffage en générant un processus de traitement en continu ;
- **caractérisé par le fait qu'une** unité de freinage (4) est ménagée en amont de la première section de chauffage (5) et une unité de tirage (7) est ménagée en aval de la première section de chauffage (5), toutes les deux étant ajustables de façon à générer un état prédéterminé de traction longitudinale de la bande, la première section de chauffage (5) étant un four (5), le four créant un canal de passage tel que la bande ne touche aucune partie du four et qu'elle soit ensuite portée en traction par l'unité de freinage (4) et l'unité de tirage (7) toutes les deux positionnées de manière externe audit four (5).

2. Procédé selon la revendication 1, dans lequel la température de fonctionnement dans lesdites première et seconde sections de chauffage est comprise dans une plage entre 180 °C et 400 °C, de préférence entre 200 °C et 390 °C.

3. Procédé selon la revendication 1 ou 2, dans lequel la température dans la première et dans la seconde section de chauffage est obtenue par l'activation d'une pluralité de sources de chaleur par infrarouge (6) agencées dans la première et dans la seconde section de chauffage.

4. Procédé selon la revendication 3, dans lequel lesdites sources de chaleur par infrarouge sont régulées de sorte que la température à l'intérieur desdites première et seconde sections de chauffage augmente progressivement de l'entrée vers la sortie, de préférence en variant de 200 °C en entrée pour atteindre 390 °C en sortie.

5. Procédé selon la revendication 3 ou 4, dans lequel lesdites sources de chaleur par infrarouge sont positionnées de façon à intercepter exclusivement le chemin de passage de la bande.

6. Procédé selon la revendication 1, dans lequel l'unité de freinage (4) est formée par une unité motorisée de rouleaux (4a, 4b, 4c) à travers lesquels la bande en cours de traitement passe, l'unité de tirage étant formée par une unité motorisée de rouleaux (7a, 7b, 7c) à travers lesquels la bande en cours de traitement passe, l'ajustement dudit état de tension étant obtenu par l'ajustement de la vitesse de rotation des rouleaux de l'unité de freinage jusqu'à une valeur inférieure par rapport à la vitesse de rotation des rouleaux de l'unité de tirage.

7. Procédé selon la revendication 1, dans lequel ledit passage à travers ladite seconde section de chauffage (8) est effectué par le biais de moyens de saisie qui saisissent les deux côtés de la bande en l'entraînant (21, 22, 23) à travers ledit chemin le long de ladite seconde section de chauffage et en générant contextuellement une traction transversale sur la bande qui tend à augmenter la distance réciproque desdits deux côtés de la bande, de préférence la bande n'ayant aucun contact avec une quelconque partie du chemin de passage de ladite seconde section.

8. Installation pour la transformation d'une bande (1) d'un matériau de type **PTFE** en une bande du type **e-PTFE,** l'installation comprenant :
- une première section de chauffage (5), ladite première section de chauffage formant un chemin de passage (P) pour ladite bande ;
- des moyens de tirage (4, 7) pour déplacer ladite bande à travers ladite première section de chauffage (5), lesdits moyens de tirage étant configurés pour générer, contextuellement au passage de la bande le long de ladite première section de chauffage, une force de traction prédéterminée dans la direction longitudinale ;
- une seconde section de chauffage (8), ladite seconde section de chauffage formant un chemin de passage pour la bande à une température prédéterminée ;
- des moyens de traction transversale (21, 22, 23) configurés pour saisir la bande sur les deux côtés de celle-ci et pour l'entraîner le long de ladite seconde section de chauffage, lesdits moyens de traction transversale (21, 22, 23) générant, pendant ledit passage le long de ladite seconde section de chauffage, contextuellement, une force de traction prédéterminée dans la direction transversale ;
- ladite seconde section de chauffage (8) étant positionnée successivement à la première section de chauffage (5) en aval de ladite première section de chauffage de sorte que la bande sortant de la première section de chauffage entre automatiquement dans la seconde section de chauffage en générant un processus de traitement en continu ;
- **caractérisée en ce qu'une** unité de freinage (4) est ménagée en amont de la première section de chauffage (5) et une unité de tirage (7) est ménagée en aval de la première section de chauffage (5), toutes les deux étant ajustables de façon à générer un état prédéterminé de traction longitudinale sur la bande, pendant le passage de celle-ci dans la première section de chauffage, ladite première section de chauffage étant un four (5) créant un canal de passage tel que la bande ne touche aucune partie du four et qu'elle soit ensuite portée en traction par l'unité de freinage (4) et l'unité de tirage (7) toutes les deux positionnées de manière externe audit four (5).

9. Installation selon la revendication 8, dans laquelle chacune desdites première et seconde sections de chauffage comprend une pluralité de sources de chaleur par infrarouge (6) agencées successivement le long du chemin de passage de ladite bande entre l'entrée et la sortie.

10. Installation selon la revendication 9, dans laquelle est compris un dispositif de régulation de chaleur programmé pour réguler lesdites sources de chaleur par infrarouge (6) de sorte que la température au sein desdites première et seconde sections de chauffage augmente progressivement de l'entrée vers la sortie, de préférence en variant d'approximativement 200 °C en entrée pour atteindre 390 °C en sortie.

11. Installation selon la revendication 9 ou 10, dans laquelle lesdites sources de chaleur par infrarouge sont positionnées de façon à intercepter exclusivement le chemin de passage de la bande.
